Europäisches Patentamt

European Patent Office

Office européen des brevets

(11) Numéro de publication: **0 049 184**
**A1**

## (12) DEMANDE DE BREVET EUROPEEN

(21) Numéro de dépôt: **81401425.4**

(51) Int. Cl.³: **G 09 B 7/08**

(22) Date de dépôt: **14.09.81**

(30) Priorité: **29.09.80 FR 8020844**

(43) Date de publication de la demande: **07.04.82**
**Bulletin 82/14**

(84) Etats contractants désignés: **AT BE CH DE GB IT LI LU NL SE**

(71) Demandeur: **Perret, Henri, 46 Avenue des Acacias, F-92500 Rueil Malmaison (FR)**

(72) Inventeur: **Perret, Henri, 46 Avenue des Acacias, F-92500 Rueil Malmaison (FR)**

(74) Mandataire: **Thibon-Littaye, Annick, Cabinet A. THIBON-LITTAYE 11 rue de l'Etang, F-78160 Marly Le Roi (FR)**

(54) **Micro-didactomètre pilote.**

(57)  Appareil didactométrique de poche pour l'exploitation des réponses fournies à chacune des questions d'un questionnaire à choix multiple caractérisé en ce qu'il comporte:
— des moyens d'introduction par clavier (100) d'une référence codée donnée à chacune des questions dudit questionnaire et d'un code de réponse choisie, sélectionné parmi plusieurs réponses possibles figurant dans le questionnaire.
— une table de vérité préenregistrée où les codes de réponses sont ordonnés en rangs successifs qui se déduisent par permutation circulaire d'une question à une autre,
— des moyens pour déterminer automatiquement, pour chaque question, le rang d'une réponse exacte dans ladite table de vérité d'après ladite référence codée de la question,
— et des moyens (200) d'évaluation de la réponse choisie à ladite question qui déterminent, d'après le rang du code de la réponse choisie par rapport à celui de la réponse exacte dans la table de vérité, une valeur qualitative de notation, au moins trois valeurs différentes étant affectées respectivement à au moins trois réponses proposées à chaque question dans le questionnaire.

## Micro-didactomètre pilote

La présente invention est relative à un appareil didactométrique portatatif (ou de poche), qui est un appareil adaptatif apte à fonctionner de façon autonome au gré de l'utilsateur, à partir de l'exploitation de tous supports informationnels (du livre programmé aux moyens audiovisuels et à la télématique)pour présenter des questionnaires dits à choix multiple différentiel. Il permet de créer un processus d'interrogation-réponse autorégulé suivant les règles de la pédagogie cybernétique, de déterminer corrélativement une notation pondérée et d'assurer la mémorisation des résultats afférents à toutes fins utiles.

Parallèlement à l'efficacité de l'instruction programmée, on connaît d'une part les avantages des systèmes d'information télévisuelle utilisés en télé-enseignement qui, face aux limites de l'enseignement traditionnel, sont de plus en plus utilisés pour la diffusion des connaissances, tant dans les pays industrialisés que dans ceux qui sont en voie de développement. On connaît aussi, d'autre part, malgré toutes ces possibilités techniques, l'inconvénient majeur que constitue au plan pédagogique l'impossibilité d'obtenir par ces moyens connus : 1) une communication interactive, 2) l'évaluation instantanée du comportement d'un utilisateur, 3) l'auto-correction immédiate de ses erreurs, 4) l'enregistrement des résultats de tests in situ. Cela fait apparaître de façon évidente l'incompatibilité qui existe entre l'instruction programmée d'une part et les moyens de diffusion de masse (mass média) d'autre part.

La présente invention se propose de pallier ces inconvénients et lacunes, en créant une communication interactive en faveur de l'utilisateur, pour laquelle il peut notamment employer son téléviseur domestique dans un système d'auto-instruction grâce à l'utilisation conjointe de l'appareil selon l'invention. De façon plus précise, l'invention se propose d'améliorer les conditions d'auto-instruction et d'optimiser l'utilisation didactique des systèmes de télévision et de télévisualisation notamment en télématique, grâce à un dispositif pratique, économique et fiable, utilisable à volonté et de façon autonome vis-à-vis de tous supports de programmes d'enseignement ou de formation. L'appareil selon l'invention constitue un appareil individuel adaptatif avec lequel on peut utiliser, de manière compatible, outre les programmes livresques, toutes les techniques audiovisuelles comme supports de programmes et/ou de tests didactiques. Cela est valable pour des systèmes tels que : magnétoscope, vidéo-disque, télétexte ou de vidéotexte, (tels que : ANTIOPE et TELETEL pour la France, TELIDON pour le Canada, CEEFAX; ORACLE et PRESTEL pour l'Angleterre et CAPTAIN pour le Japon), tous ces termes constituant des dénominations commerciales ou des marques déposées, magnétophone synchronisé avec un projecteur de diapositives, dans la mesure où il est possible, selon une technique connue quelconque, de commander, piloter ou stopper à volonté le déroulement séquentiel d'une émmission ou d'un programme, pour contrôler la compréhension d'un message ou mesurer l'acquisition de connaissances. En conséquence, cet ap-reil permet une utilisation plus étendue et plus souple que celle des appareils ou dispositifs actuellement disponibles sur le marché.

Pour trouver des descriptions de dispositifs qui ont été proposés antérieurement à la présente invention, on peut se référer notamment au brevet Britannique 1 514 790, au brevet Américain 3 528 181 ou au brevet Britannique 1 321 828. Mais dans tous les cas, et contrairement à la simplicité de l'appareil selon la présente invention, il s'agit de dispositifs extrêment lourds et complexes, qui comportent un ordinateur et qui demandent l'emploi de programmes d'ordinateur pour pouvoir fonctionner. De plus lorsque jusqu'à ce jour, on a cherché à obtenir une évaluation qualitative des résultats des test auxquels se soumet l'utilisateur de l'appareil, en quelque sorte une notation par plus de 2 valeurs, on n'a jamais su trouver d'autre solution que celle qui consiste à multiplier le nombre des questions posées ou le nombre des réponses proposées par question et à dénombrer dans les réponses choisies par l'utilisateur les réponses correctes et les réponses incorrectes, chaque réponse ne pouvant jamais prendre que l'une des deux seules valeurs vrai et faux. On comprend alors pourquoi l'évaluation qualitative impliquait nécessairement l'emploi de dispositifs forts complexes, de puissances suffisantes pour mémoriser la totalité des réponses vraies ou fausses proposées et traiter un grand nombre de réponses fournies par l'utilisateur avant de parvenir à une notation. Avec sa simplicité, l'appareil selon l'invention permet au contraire de fournir une évaluation qualitative des résultats des tests en affectant au moins 3 valeurs différentes aux réponses qui sont proposées pour une même question. Autrement dit pour une question déterminée, l'utilisateur a à choisir parmi au moins 3 réponses possibles auxquelles sont affectées respectivement au moins 3 valeurs différentes. Il peut être proposé par exemple une réponse vraie, une réponse fausse et une ou plusieurs réponses de niveaux de qualité intermédiaires entre vrai et faux. Et l'appareil selon l'invention est conçu pour pouvoir prendre en compte toutes ces valeurs différentielles pour une série de questions, toutes celles d'un questionnaire complet, sans nécessiter pour autant des capacités de mémoire importantes et sans faire appel à des programmes complexes.

Un objet de l'invention consiste à réaliser un dispositif adaptatif, facile à utiliser et économique, permettant d'obtenir instantanément à partir de l'exploitation de tous supports informationnels à vocation didactique, notamment audiovisuels, l'évaluation pondérée des réponses fournies au cours de tests dits à choix multiples, ainsi que le stockage des résultats en vue de leur exploitation immédiate ou différée et ce sans avoir à modifier la programmation de l'appareil au sens informatique du terme à chaque changement de cours ou d'exercice.

0049184

Un autre objet de l'invention est d'ajouter à la fonction de diffusion d'informations de téléviseurs domestiques équipés le cas échéant de systèmes de télématique précedemment cités et/ou magnétoscopes, lecteurs de vidéodisques, asservis, une fonction de communication dialoguée , à processus d'interrogation-réponse par dispositif interposé, en pédagogie cybernétique.

Un autre objet est de réaliser un appareil individuel portatif autonome disposant d'un dispositif d'entrée de données, permettant de créer de l'information de commande logique nécessaire à l'exécution d'un processus automatique d'un opérateur de commande logique, apte à traiter ladite information de commande avec mise en mémoire, et d'un dispositif de sortie pour l'information de l'utilisateur et l'asservissement de moyens audio-visuels.

Un autre objet est de réaliser un appareil polyvalent qui, du point de vue de la didactométrie, puisse être utilisé quelle que soit la matière à enseigner, en auto-instruction, et qui, du point de vue technique, puisse être aisément connectable, associé ou incorporé aux systèmes,dispositifs et installations de la technique antérieure grâce à des adaptations ou modifications mineures et peu coûteuses.

Un autre objet est de pouvoir utiliser de manière standard, grâce aux caractéristiques particulières de l'appareil de l'invention, le système de pédagogie cybernétique à choix différentiel quantifié qui existe déjà pour exploitation avec des appareils connus tels que celui qui est décrit dans le brevet américain N° 3 579 875 délivré le 25 Mai 1971.

Pour réaliser les objets principaux ci-dessus énoncés l'invention a pour objet un appareil didactométrique pour l'exploitation des réponses à un questionnaire à choix multiple, caractérisé en ce que l'appareil selon l'invention est destiné à être utilisé en liaison avec un questionnaire du type à choix multiple différentiel. un tel questionnaire contient une série de questions, il attribue une référence codée, par exemple numérique, à chaque question et il propose pour chacune plusieurs réponses possibles dans lesquelles l'utilisateur doit faire son choix. A titre d'exemple, les réponses possibles peuvent être au nombre de 4, caractérisées par les chiffres 1, 2, 3, et 4. Pour permettre l'évaluation assurée au moyen de l'appareil selon l'invention, il est prévu que la référence codée de chaque question contienne une information définissant quel est le rang de la réponse exacte dans ces choix possibles et que les réponses fausses soient ordonnées à la suite de la réponse exacte suivant des valeurs dégressives qu'on leur attribue suivant les règles de la permutation circulaire. Les informations correspondantes sont contenues dans la table de vérité préenregistrée dans l'appareil ou sélectionnée à la mise en route par l'introduction d'une référence codée propre au questionnaire.

Suivant l'invention, l'appareil comporte avantageusement trois modules tels que définis ci-après, qui peuvent être intégrés dans un même boîtier pour constituer un dispositif en format de poche à l'exemple des calculettes.

Le premier est un module d'entrée, qui comporte avantageusement plusieurs claviers, soit au moins un clavier numérique pour l'introduction de la référence de la question et un clavier de choix docimologique pour l'introduction du rang de la réponse, comportant autant de touches de choix qu'il y a de réponses possibles à chaque question du questionnaire. Le clavier numérique peut permettre aussi de composer et d'enregistrer des références générales du questionnaire ou de l'utilisateur, et il peut comporter également des touches de fonctions pour la commande de dispositifs associés à l'appareil. Le clavier docimologique utilisé pour introduire le choix de la réponse éventuellement être réalisé avec un nombre de touches réduit dans la variante où il existe autant de combinaisons de touches qu'il y a de choix possibles. Par ailleurs, le module d'entrée peut comporter en outre un dispositif de visualisation des données d'entrée et autres références et, ce module peut être conçu de manière à créer de l'information de commande logique pour l'exécution d'un processus automatique : interrogation-réponse-évaluation-stockage des résultats, outre la fonction d'asservissement des moyens audiovisuels précédemment mentionnés.

Un second module est un module d'interface comportant, dans un mode de réalisation préféré :

a) une mémoire logique à table de vérité pré-enregistrée, définissant sous une forme codée les adresses numériques des questions successives, leur niveau de difficulté et le rang du choix exact associé à chacune d'elles, étant entendu qu'il doit y avoir autant de séries d'adresses qu'il y a de choix possibles ;

b) un opérateur de commande logique, à logique de décision par permutation circulaire quantifiée, dans lequel ladite information de commande logique est transférée afin de permettre audit opérateur logique d'assurer les commandes logiques en fonction, d'une part des choix de réponses introduits depuis le clavier docimologique et, d'autre part, des informations de référence en provenance de la mémoire logique ;

c) une horloge permettant de contrôler le temps passé à l'exécution de tests et de comparer ainsi les résultats entre différents utilisateurs;

La valeur qualitative de la réponse déterminée ci-dessus est transmise à un module de sortie, lequel comporte avantageusement :

a) des voyants lumineux et/ou graphiques, permettant l'affichage des informations émises par l'opérateur de commande logique ;

b) un circuit de commande logique, à vocation d'asservissement de dispositifs ou d'appareillages externes au dispositif, à partir de l'information logique de commande ;

c) un dispositif d'enregistrement et de stockage à mémoire magnétique et/ou électronique des résultats, en vue de leur expédition vers un centre d'exploitation ou de leur transmission téléphonique vers un ordinateur centralisateur selon tous les moyens connus de la technique.

Conformément à l'invention, la mémoire logique du module d'interface ci-dessus et le clavier à choix multiples sont connectés avec l'opérateur logique, de manière, d'une part à déterminer, par comparaison entre le rang de la réponse exacte défini par la table de vérité et le rang de la réponse choisie sélectionné par l'utilisateur au clavier, si la réponse est vraie ou fausse, d'autre part d'obtenir, par discrimination entre les degrés d'exactitude de la réponse proposée, selon la table de vérité, l'évaluation pondérée de cette réponse en fonction du nombre de choix proposés et du niveau de difficulté considéré à partir de critères prédéterminés, ce qui correspond en fait à une notation à base de valeurs discrètes et non seulement binaires.

L'appareil comporte avantageusement des moyens pour mettre sous tension un circuit de commande du module de sortie, à partir des informations logiques de commande élaborées par l'opérateur de décision logique de commande en fonction des réponses fournies, en vue d'assurer l'asservissement de tout système audiovisuel ou de télévisualisation, dans lequel le déroulement séquentiel d'une émission d'information ou d'un programme de connaissance peut être modifié ou interrompu pour contrôler l'acquisition des connaissances, au fur et à mesure de sa diffusion.

D'autres objets, caractéristiques et avantages de l'appareil selon l'invention ressortiront d'un mode de réalisation préféré, mais non limitatif de celle-ci et des planches de schémas et dessins y associés, sur lesquelles :

la figure 1 est un schéma d'ensemble du dispositif selon l'invention, faisant apparaître les sous-ensembles élémentaires ;

la figure 2 est un dessin d'une forme de réalisation possible du multi-clavier de commande, en vue de satisfaire aux objectifs de l'invention ;

la figure 3 est un schéma descriptif des circuits logiques de commande et des fonctions booléennes y associées, en vue d'en expliciter le fonctionnement caractéristique ;

la figure 4 est la représentation d'une forme de réalisation d'une table de vérité selon le système "SAPIENS" faisant apparaître tout à la fois les adresses numériques de quatre choix de référence et l'indicatif des niveaux de tests ;

la figure 5 est une vue d'ensemble d'une forme possible de réalisation de l'appareil selon l'invention ; et

la figure 6 est un schéma opérationnel intersystèmes montrant les interactions possibles, à la discrétion de l'utilisateur, à partir de la mise en oeuvre du dispositif et de l'appareillage y asservi.

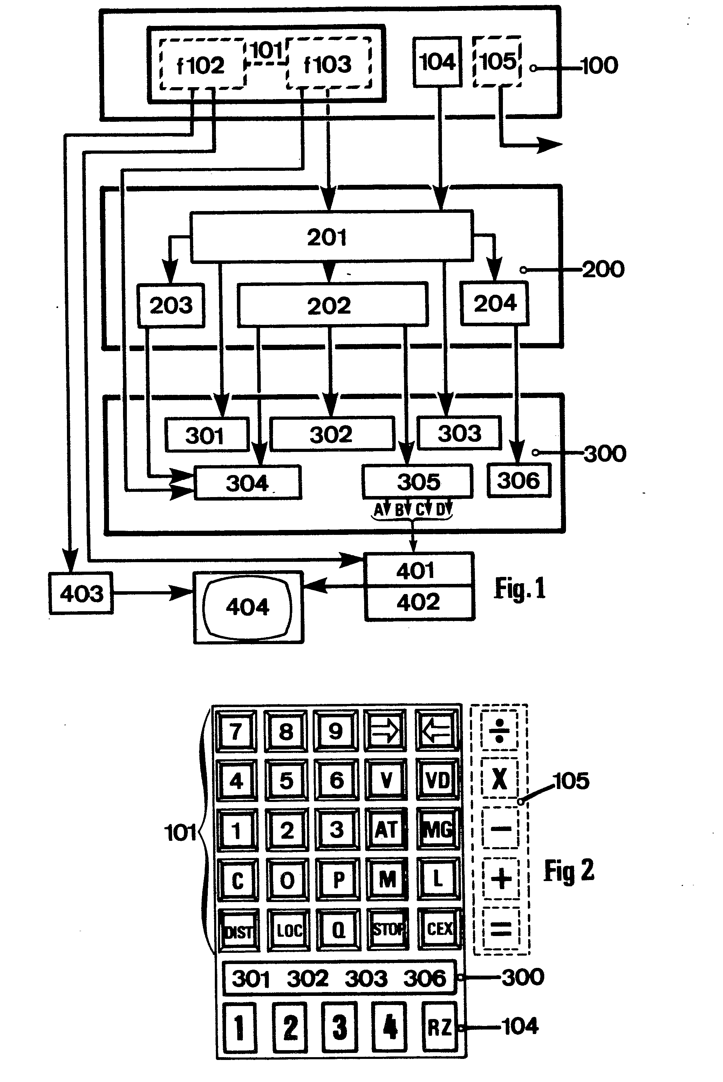

Sur la figure 1, le schéma distingue trois modules de base : 100, 200, 300, dans le dispositif selon l'invention.

Le module 100, dit module d'entrée, comporte deux types de claviers, un clavier numérique 101 et un clavier docimologique ou clavier de choix 104, destinés l'un et l'autre à recevoir de l'information codée sous forme numérique, et en outre des touches dites de fonction, dont il sera traité ultérieurement. Suivant que l'utilisateur a actionné l'une ou l'autre de ces touches de fonction, le clavier 101 permet d'exercer à volonté les fonctions 102 ou 103. La fonction 102 permet la commande à distance d'un terminal de télévisualisation du type "ANTIOPE"(dénomination commerciale) ou autre 403, d'un magnétoscope 401, ou d'un lecteur de vidéodisque 402, selon tous procédés connus propres à ces systèmes, qui sont reliés à un téléviseur domestique 404 possédant une prise de péritélévision. La fonction 103 permet d'incrémenter le dispositif avec des données spécifiques à sa fonction propre, par exemple le numéro de code de l'utilisateur, la référence d'un cours, le numéro de la question à laquelle il doit être répondu à l'aide du clavier de choix 104. Ce dernier comporte, dans le cas présent, quatre touches de sélection de choix, mais il n'en laisse agir qu'une seule à la fois. L'utilisateur presse celle dont le chiffre 1, 2, 3, ou 4, correspond au code de rang de la réponse qu'il a choisie parmi quatre réponses possibles proposées dans le questionnaire.

Le module 200, dit module d'interface, comprend, d'une part une mémoire logique 201 préprogrammée contenant une table de vérité fonctionnant à partir de quatre fonctions logiques, et un opérateur logique 202 dans lequel interviennent une variable m qui désigne le rang $RR_p$ de la réponse exacte et une variable f qui indique celui de la réponse réellement fournie (matérialisée par la position de l'une des quatre touches du clavier 104 de choix de réponse). Quatre éventualités peuvent se présenter pour chaque valeur de m suivant que la réponse fournie est la réponse exacte ou l'une quelconque des trois autres réponses, nécessairement fausses. Pour la mise en oeuvre de l'invention, les quatre réponses sont ordonnées en fonction de leur niveau de valeur qualitative suivant un ordre qui s'obtient par permutation circulaire après le rang de la réponse exacte. Les différentes possibilités sont classées dans le tableau suivant qui désigne par A le rang de la réponse exacte et par B, C, D, les rangs des réponses fausses de valeur progressivement décroissante,

(VOIR TABLEAU PAGE SUIVANTE)

| m | f | | | |
|---|---|---|---|---|
| | 1 | 2 | 3 | 4 |
| 1 | A | D | C | B |
| 2 | B | A | D | C |
| 3 | C | B | A | D |
| 4 | D | C | B | A |

Chacune des fonctions logiques A, B, C, D, peut s'exprimer au moyen des notations de l'algèbre de Boole. Si l'on désigne par $X_1, X_2, X_3$ et $X_4$ quatre variables binaires telles que $X_i = 1$ pour $i = m$ et $X_i = 0$ pour $i \neq m$ (avec $1 \leqslant i \leqslant 4$), et par $Y_1$, $Y_2$, $Y_3$ et $Y_4$, quatre autres variables binaires telles que $Y_j = 1$ pour $j = f$ et $Y_j = 0$ pour $j \neq f$, les quatre fonctions logiques considérées peuvent s'écrire :

Réponse vraie : $A = X_1Y_1 + X_2Y_2 + X_3Y_3 + X_4Y_4$

Réponse fausses : $B = X_1Y_2 + X_2Y_3 + X_3Y_4 + X_4Y_2$

$$C = X_1Y_3 + X_2Y_4 + X_3Y_1 + X_4Y_2$$

$$D = X_1Y_4 + X_2Y_1 + X_3Y_2 + X_4Y_3$$

Dans les équations précédentes, les réponses fausses B, C et D, sont à ce stade qualitativement indifférenciées.

La comparaison entre les variables m et f s'effectue dans l'opérateur de décision logique 202, où elles sont transférées après décodage et où est effectuée la discrimination entre les degrés de vérité des réponses fournies en vue d'obtenir une évaluation pondérée des valeurs afférentes. C'est dans ce but qu'il a été imaginé de caractériser chaque variable m par un code numérique définissant le choix exact et de situer corrélativement les autres choix, à partir de leur degré d'exactitude, tels que par exemple la réponse exacte sera désignée arbitrairement par la lettre A pour une valeur 100, la réponse inexacte la plus proche de la réponse exacte par la lettre B de la valeur 75, la réponse inexacte intermédiaire par la lettre C de valeur 50, et la réponse inexacte inférieure par la lettre D de valeur 25. Pour satisfaire à ces critères docimologiques, l'opérateur logique ordonne les fonctions et les variables conformément à la table ci-après :

| m | A = 100 | B = 75 | C = 50 | D = 25 |
|---|---------|--------|--------|--------|
| 1 | $X_1 Y_1$ | $X_1 Y_2$ | $X_1 Y_3$ | $X_1 Y_4$ |
| 2 | $X_2 Y_2$ | $X_2 Y_3$ | $X_2 Y_4$ | $X_2 Y_1$ |
| 3 | $X_3 Y_3$ | $X_3 Y_4$ | $X_3 Y_1$ | $X_3 Y_2$ |
| 4 | $X_4 Y_4$ | $X_4 Y_1$ | $X_4 Y_2$ | $X_4 Y_3$ |

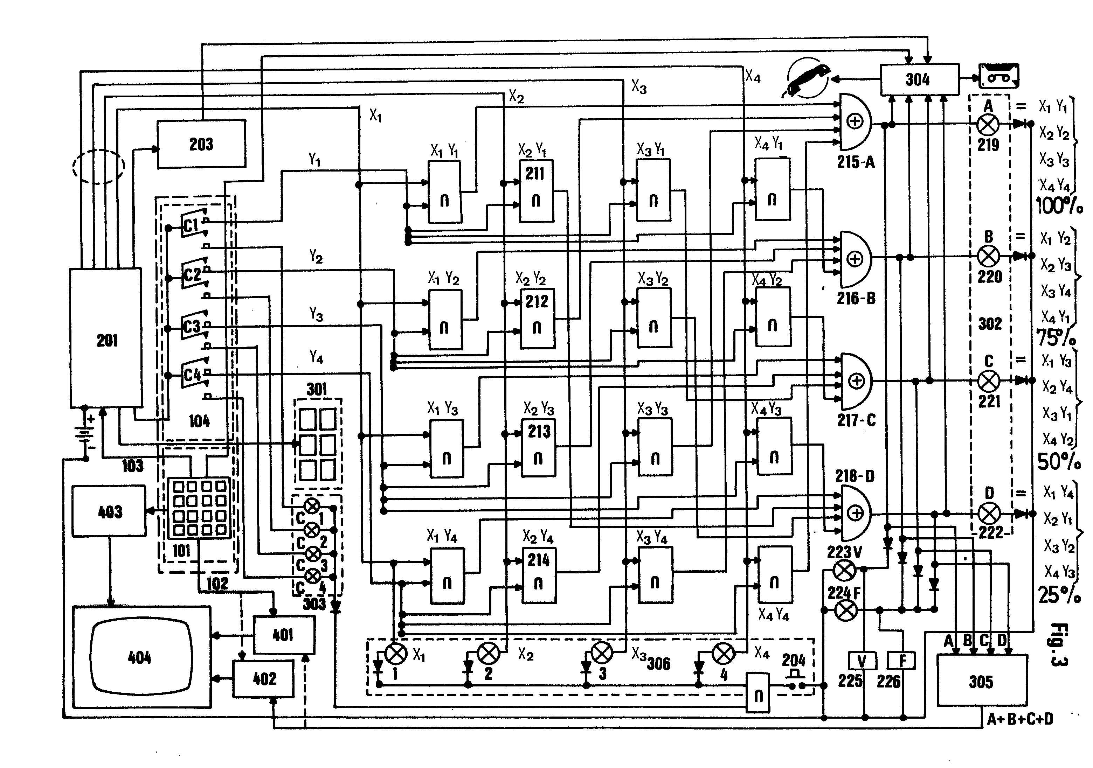

ainsi que cela sera expliqué et démontré à l'aide de la description de la figure 3 et de la figure 4 pour ce qui concerne la table de vérité et le codage numérique des références de questions.

Outre la mémoire 201 et l'opérateur logique 202, le module 200 comporte une horloge 203, destinée à mesurer et à enregistrer le temps d'exécution des tests, et un indicateur de choix exact 204 que l'on peut interroger seulement après avoir fourni une réponse et qui commande un voyant 306.

Le dernier module 300, dit module de sortie, permet l'affichage des numéros de référence des questions et du niveau corrélatif en 301, l'affichage de la valeur (A, B, C, ou D) de la réponse fournie en 302, l'affichage du numéro de rang de la réponse selon le choix effectué en 303, pour contrôle. Enfin, il comporte d'une part une mémoire de stockage des informations de référence et des résultats 304, constituée soit sous forme de mémoire électronique modulaire, permettant le transfert par voie téléphonique, selon une technique connue, sur ordinateur central, soit sous forme
de cartouche ou de minicassette que l'on peut expédier sous
enveloppe par la poste vers un centre d'exploitation. Il
comporte d'autre part un dispositif de commande de magnétophone ou de lecteur de vidéodisque 305, fonctionnant de
manière connue à partir du degré d'exactitude de la réponse fournie (valeur A, B, C ou D) pour commander les sauts,
l'avance rapide, les retours en arrière et les arrêts-conditionnels, d'un magnétoscope 401 ou lecteur de vidéodisque
402, connectés, ainsi qu'un dispositif de télétexte 403,
en péritélévision, au récepteur domestique 404. Le dispositif de télétexte 403 est commandé directement depuis
le clavier 101.

La figure 2 est une représentation possible du clavier numérique 101 et du clavier de choix docimologique, dans un
ensemble comportant en outre un tableau d'affichage des
éléments 301, 302, 303 et 306, précédemment décrits. Ainsi
que cela a été exposé au cours de la description de la figure 1, le clavier numérique 101 peut être utilisé en configuration externe f102 ou interne f103. En configuration
f102, obtenue par pression sur la touche de fonction "DIST",
le clavier se trouve en position de travail relativement
à un dispositif de télétexte du type ANTIOPE, développé
en France par le C.C. E.T.T., tant au point de vue numérique
que de ses touches de fonction et de leurs codes respectifs. Ainsi, les touches de fonction "C" (choix), "p" (page),
"M" (magazine), "AT" (télétexte-programme), "V" (veille),
"➔" et "⬅" (tourne-page), correspondent-elles aux fonctions
de commande du système de télétexte ANTIOPE, telles que définies par le constructeur de ce système. Quant à la suite
de la touche "DIST" on actionne la touche "VD", l'appareil
se trouve en position de commande, via son clavier, d'un
lecteur de vidéodisque, à partir d'un bloc-circuit de commande spécifique, selon une technique connue. De même,
l'utilisation de la touche "MG", à la suite de "DIST" le
met en position de commande d'un magnétoscope , de la même manière. Enfin, en configuration dite interne, l'utilisation de la touche "LOC" permet en un premier temps de composer au clavier le matricule codé de l'utilisateur en vue de son identification, et de l'inscrire temporairement sur un secteur du tableau d'affichage 300 (de même le numéro de référence d'un cours, d'un exercice, etc.). Puis, pour répondre à une question dite à choix différentiel, il suffit d'actionner la touche "Q" et de composer à la suite le numéro de code de celle-ci, lequel apparaîtra pour contrôle sur le tableau d'affichage 300, et d'actionner l'une des quatre touches de choix, réflexion faite, pour voir apparaître quasi-instantanément l'affichage de la valeur A, B, C, ou D, de la réponse fournie. Une touche "CEX" permet, seulement après réponse, de faire apparaître le rang de la réponse exacte en cas d'erreur. Enfin, une touche "L" permet, le cas échéant, de transférer le contenu de la mémoire électronique par voie téléphonique grâce à un coupleur acoustique suivant un procédé également connu. La touche "RZ" permet d'effacer les informations inscrites sur le tableau d'affichage électronique au cours des opérations précédentes, à l'issue d'un cycle.

La figure 3 représente tout à la fois, l'organisation structurelle du dispositif et le fonctionnement de ses organes essentiels,notamment de son opérateur de décision logique, à partir de composants électroniques. Il convient de noter que les différents organes de logique et de commande électroniques du dispositif ayant un mode de réalisation connu, ne sont pas représentés physiquement . Sur le schéma, on a fait figurer quatre circuits logiques qui sont associés respectivement à chacun des quatre rangs possibles pour une réponse exacte. Lorsqu'à partir du clavier 101 la mémoire contenant la table de vérité 201 se trouve incrémentée par une valeur numérique d'un numéro de question définissant un choix exact, en tant qu'information logique de commande, le circuit logique afférent se trouve excité et il applique cette excitation aux entrées d'une colonne de quatre portes ET à deux entrées chacune. Il est entendu que chaque porte ET produit un signal de sortie si, et seulement si, toutes les entrées sont excitées.

La figure 4 est la représentation d'une table de vérité en application du système "SAPIENS" comportant, d'une part une matrice numérique à deux entrées pour la définition des choix exacts 1, 2, 3 ou 4, une entrée (chiffres alignés horizontalement) correspondant au rang des dizaines, une autre entrée (chiffres se succédant verticalement) correspondant au rang des centaines, afin de composer à loisir des nombres de deux chiffres, tout en évitant de créer des séries de choix identiques. D'autre part, la colonne des unités (à droite de la matrice sur la figure) est affectée aux niveaux des tests répartis en trois catégories : test initial (T.I.) utilisant les chiffres 0 et 2, test final (T.F.) utilisant les chiffres 7 et 9 et, enfin, les tests dits de progression à plusieurs niveaux de difficulté : N1 = 6, N2 = 5, N3 = 4 et 8, ainsi qu'un niveau dit de synthèse $\Sigma$ = 1 et 3. Si l'on décide du codage d'un test de progression de niveau 3 et de rang de choix 4, il suffit d'associer un chiffre de dizaine avec un chiffre de centaine de choix 4 et de combiner le nombre de deux chiffres ainsi obtenu avec le chiffre correspondant au niveau du test pour les unités et obtenir ainsi un nombre de trois chiffres permettant un codage de 000 à 999, ce qui est à la fois nécessaire et suffisant pour faire face aux exigences de diversité de codes et d'adresses, et ce, quelle que soit la matière enseignée, car ce codage est universel.

Supposons maintenant que l'utilisateur compose le nombre 903, sur le clavier numérique. Ce nombre définit arbitrairement, d'après le codage numérique de la table de vérité selon la figure 4, un niveau de test donné par les unités et un choix exact défini par la combinaison de la dizaine et de la centaine. Dans le cas présent, le niveau de test est celui qui est symbolisé pour le chiffre 3 sur la figure 4, tandis que le chiffre 9, à lire en centaine en bas de colonne sur la figure, et le chiffre 0, à lire en dizaine en début de ligne, définissent ensemble le rang m = 2 pour la réponse exacte. D'une part le nombre 903 introduit va s'afficher selon tous moyens connus en 301, tandis que d'autre part le circuit de la variable $X_2$ va être mis sous tension et va exciter l'une des deux entrées de chacune des quatre portes ET, 211, 212, 213 et 214 qu'il comporte. Supposons alors que l'utilisateur actionne la touche de choix C2 correspondant à la variable $Y_2$ sur le clavier docimologique de sélection 104, le chiffre 2 va apparaître sur le voyant 303, tandis que le circuit de la variable $Y_2$ se trouvera sous tension à son tour à la seconde entrée de la porte ET 212 $(X_2Y_2)$ qui, rendue active, va exciter la porte OU+215, de rang A $(X_2Y_2)$, laquelle produit un signal de sortie si, et seulement si, une seule de ses entrées est excitée. Cette porte provoque alors plusieurs opérations spécifiques : 1) le signal de sortie de rang A est transféré en mémoire 302 ; 2) la même information est transmise au dispositif de commande 305 ; 3) ledit signal active le voyant 219 de rang A ; 4) de même, ledit signal peut actionner le cas échéant un voyant vert 223 (VRAI) ; 5) il positionne un totalisateur de réponses exactes 225. Si dans l'hypothèse de travail considérée l'utilisateur, au lieu d'utiliser la touche C2, utilise la touche C3, cela aura pour effet de mettre sous tension le circuit $Y_3$ et d'exciter la porte ET 213 $(X_2Y_3)$ et d'activer la porte OU+216 ( $X_2Y_3$) de rang B, et la suite : mise en mémoire 304, bloc de commande 305, voyant 220, voyant d'erreur 224, totalisateur d'erreurs 226. Si l'utilisateur choisit la touche C4, mettant sous tension le circuit $Y_4$, excitant la porte ET 214 $(X_2Y_4)$ et la porte OU+ 217 de rang C$(X_2Y_4)$ et la suite : mise en mémoire 304, bloc de commande 305, voyant 221, voyant d'erreur 224, registre 226. Si, enfin, l'utilisateur choisit la touche C1 , il met sous tension le circuit $Y_1$, excitant la porte ET 211 $(X_2Y_1)$ et la porte OU+ 218 de rang D $(X_2Y_1)$, et la suite : mise en mémoire 304, bloc de commande 305, voyant 222, voyant d'erreur 224 et totalisateur d'erreurs 226.

0049184

Le même processus se reproduira pour chaque combinaison des variables X et Y, par permutation circulaire quantifiée. Cela signifie, selon une caractéristique essentielle de l'invention, que la définition et la mise en mémoire permanente des séries de codes de questions sous forme de table de vérité et la désignation corrélative du rang du choix exact sont effectuées une fois pour toutes et demeurent valables sous leur forme numérique pour tous programmes d'enseignement, quelle qu'en soit la matière, à partir d'un répertoire de référence. Cela explique le fait capital qu'il n'est pas nécessaire de modifier ou de changer la programmation de l'appareil à chaque changement de test ou de matière, car l'opérateur de commande logique fonctionne systématiquement, corrélativement à la disposition et à l'ordre du rang des choix dans un questionnaire type quelle qu'en soit la nature.

Un bouton poussoir 204 (figure 3) permet de faire apparaître le rang de la réponse exacte en 306, par l'intermédiaire d'une porte ET qui ne laisse passer la commande que pour la question traitée , l'une des touches C1 à C4 ayant déjà été pressée pour introduire la réponse choisie et fournir les résultats d'évaluation.

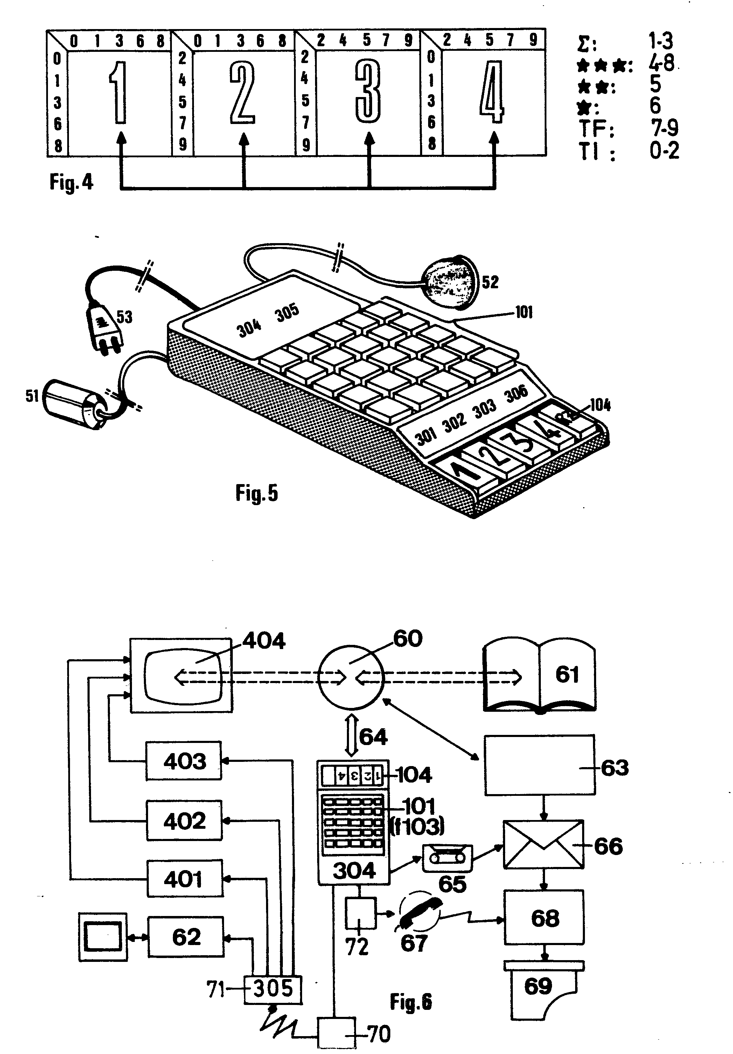

La figure 5 représente une forme possible de réalisation de l'appareil selon l'invention, pouvant fonctionner de façon autonome, sur piles, batterie, accus rechargeables, mais pouvant également fonctionner sur secteur (prise 53) si besoin. L'appareil ainsi représenté comporte d'une part un connecteur 51 permettant de le connecter avec un terminal de télévisualisation du type "ANTIOPE" par exemple, avec un lecteur de vidéodisque ou un magnétoscope, conformément à ce qui a été précédemment exposé et, d'autre part, il est doté d'un coupleur acoustique 52 permettant de transférer l'information stockée dans la mémoire transitoire de l'appareil, à l'aide d'un récepteur téléphonique, par télétransmission, vers un ordinateur ou centre d'informatique, selon tous procédés connus.

La figure 6 est une illustration schématique de différènts processus possibles dont le choix est à la discrétion de l'utilisateur, dans l'exploitation didactométrique de l'appareil selon l'invention, relativement à l'acquisition de données didactiques, leur traitement, leur stockage en mémoire transitoire, leur exploitation, sur place ou à distance, immédiate ou différée. Sur cette figure, l'utilisateur 60, à partir d'informations et/ou d'instructions, vues, lues ou entendues, à partir d'un livre de test 61, d'un magnétophone 62, synchronisé le cas échéant avec un projecteur de diapositives (non figuré), d'un téléviseur 404, enregistre les références et les données d'interrogation sur son appareil, grâce au clavier et fournit sa réponse grâce au clavier de choix 104, après l'avoir explicitée le cas échéant sur un formulaire d'exercice personnel 63. A ce moment là, le dispositif lui indique immédiatement la valeur de sa réponse, ce qui crée une première interaction 64. entre l'utilisateur et l'information via l'appareil, lequel a déjà enregistré et mis en mémoire en 304 (cartouche, cassette magnétique ou mémoire électronique modulaire), les éléments précédents.Puis, suivant une alternative, ou bien l'utilisateur se réfère aux instructions de son livret de test, en fonction de sa réponse, ou bien il déclenche un processus automatique à partir de son dispositif, par asservissement d'un magnétoscope 401, d'un lecteur de vidéodisque 402 ou d'un terminal de télétexte 403 (dans ce cas le dispositif joue le rôle de "tourne-page" selon la réponse fournie). Le même effet peut être obtenu avec le magnétophone synchronisé 62 et la commande peut être opérée par télétransmission entre les unités 70 et 71. Le processus 64, interactif, est ainsi entretenu par feedback, en fonction du comportement de l'utilisateur d'une part et de la rétroaction du dispositif d'autre part. A la fin de différentes phases du processus ci-dessus, l'utilisateur peut selon la technique utilisée pour le stockage des résultats de tests, soit mettre la cartouche ou la cassette enregistrée 65 dans une enveloppe 66, accompagnée de sa feuille d'exercice 63 le cas échéant, et l'adresser

par la poste au centre d'exploitation concerné, soit transférer par un appareil de télécommunication 67 à travers un coupleur acoustique 72, selon tout procédé et technique connus, le contenu de la mémoire électronique incorporée, vers un centre de traitement informatique 68, pour dépouillement et exploitation pédagogique et/ou statistique en 69, soit à titre individuel, soit à titre collectif selon le cas. Enfin, il est possible d'adjoindre à l'appareil les fonctions d'une calculatrice individuelle, en le complétant par un module arthmétique et ses touches de fonctions afférentes 105 (figure 2) en vue de lui conférer, outre ses fonctions spécifiques, une fonction d'utilité générale.

Ainsi qu'on aura pu le constater au cours de cette description, l'utilisateur peut employer successivement ou simultanément différents types de supports informationnels, notamment un programme imprimé et des programmes audio,visuel ou audiovisuel. Par exemple, l'exposé peut être visuel ou audiovisuel et le questionnaire imprimé, ou vice-versa. En tout état de cause, cela permet une démultiplication des possibilités et des moyens pédagogiques, car l'utilisateur peut utiliser l'appareil dans n'importe quelle langue, le code utilisé étant uniquement numérique, donc facilement adaptable d'un mode à l'autre.

Bien que l'on ait fait ressortir dans ce qui précède les caractéristiques essentielles de l'invention, grâce à un mode de réalisation préféré, l'invention n'est pas limitée à une telle réalisation, et elle en englobe au contraire toutes les variantes dans le cadre des revendications ci-après.

Revendications

1. Appareil didactométrique de poche pour l'exploitation des réponses fournies à chacune des questions d'un questionnaire à choix multiple comportant un clavier d'introduction d'un code de réponse choisie, sélectionné parmi les codes de plusieurs réponses possibles figurant dans le questionnaire et des moyens pour déterminer le rang dudit code dans une table de vérité préenregistrée où les codes de réponses sont ordonnés par permutation circulaire d'une question à une autre, caractérisé en ce qu'il comporte en outre des moyens d'introduction par clavier d'une référence codée attribuée à chacune des questions dans le questionnaire et déterminant le rang du code de la réponse exacte correspondante dans ladite table de vérité, et des moyens d'évaluation de la réponse choisie pour chaque question qui déterminent ., ; d'après le rang du code de la réponse choisie par rapport à celui de la réponse exacte dans la table de vérité, une valeur qualitative de notation, au moins trois valeurs différentes étant affectées respectivement à au moins trois réponses proposées à chaque question dans le questionnaire.

2. Appareil didactométrique selon la revendication 1, caractérisé en ce qu'il comporte un module d'entrée constituant lesdits moyens d'introduction par clavier (100), et comportant un clavier mixte (101) permettant la commande d'un terminal de télévisualisation ou de péritélévision 102 d'une part et l'introduction de la référence codée de la question (103), sous forme numérique, d'autre part, ainsi éventuellement qu'une référence de l'utilisateur, et un clavier docimologique (104) pour l'introduction du code de réponse choisie, notamment sous forme de code numérique, ledit clavier docimologique comportant autant de touches de choix qu'il y a de réponses possibles à chaque question du questionnaire, un module d'interface à circuit logique (200) comportant ladite table de vérité, les moyens pour déterminer le rang de la réponse exacte, et lesdits moyens d'évaluation et un module de sortie (300) pour la visualisation de la valeur qualitative déterminée, ces 3 modules étant incorporés dans un boîtier multiclavier.

3. Appareil didactométrique selon la revendication 2, caractérisé en ce qu'il comporte des moyens pour rendre actif parmi différents circuits logiques du module d'interface, respectivement affectés à chacun des rangs possibles pour les réponses à chaque question, l'un seul de ces circuits, sélectionné en fonction du rang de la réponse exacte déterminé dans le module d'interface à partir de la table de vérité préenregistrée et de la référence numérique de la question.

4. Appareil didactométrique selon la revendication 3, caractérisé en ce qu'il comporte des moyens pour rendre actif, parmi différents circuits de commande du module de sortie, respectivement affectés à chacune des valeurs qualitatives possibles, en nombre égal à celui des réponses possibles à chaque question, l'un seul de ces circuits, sélectionné en fonction dudit circuit logique sélectionné et de la touche de choix actionnée au clavier.

5. Appareil didactométrique selon l'une quelconque des revendications 2 à 4, caractérisé en ce que le module d'interface comprend au moins une mémoire logique permanente (201) où sont préenregistrées des informations de la table de vérité et un opérateur spécifique de commande logique de décision (202), connectés fonctionnellement : a) au clavier numérique (101) pour sélectionner le rang de la réponse exacte en fonction de ladite table de vérité et de la référence numérique de question introduite au clavier numérique, et ordonner les différentes réponses possibles par valeurs qualitatives à partir d'un ordre prédéterminé de leurs rangs respectifs et du rang de la réponse exacte par permutation circulaire ; b) au clavier docimologique de choix (104) pour comparer aux rangs des réponses ainsi ordonnées le rang de la réponse choisie par introduction audit clavier docimologique de choix ; et c) au module de sortie (300) pour commander la visualisation de la valeur qualitative de la réponse choisie en fonction de ladite comparaison.

6. Appareil selon la revendication 5, caractérisé en ce que le module d'interface logique comporte en outre une horloge de contrôle et/ou de mesure.

7. Appareil selon l'une quelconque des revendications 2 à 6, caractérisé en ce que le module de sortie comprend des moyens d'affichage des différentes valeurs des réponses fournies à des questions successives, un dispositif d'enregistrement et de mémorisation des résultats, et un système de commande logique de moyens télématiques asservis, à partir d'informations de commande logique fournies par le module d'interface et le module d'entrée.

8. Appareil selon la revendication 7, caractérisé en ce que le dispositif de mémorisation est constitué par une cartouche ou une mini-cassette magnétique, ou par une mémoire électronique modulaire.

9. Appareil selon l'une quelconque des revendications 1 à 8, caractérisé en ce qu'il est réalisé dans la dimension et sous la forme d'une calculette individuelle de poche, dont il peut avoir les fonctions, par adjonction d'un module arithmétique et des touches de fonction afférentes.

10. Appareil selon l'une quelconque des revendicaitons 1 à 9, caractérisé en ce qu'il comporte en outre des moyens pour visualiser le rang de la réponse exacte, à commande inactive jusqu'à l'introduction d'un rang de réponse choisie.

**Fig.1**

**Fig 2**

Fig. 3

0049184
Pl.II/3

Fig. 4

| Σ: | 1-3 |
| ★★★: | 4-8 |
| ★★: | 5 |
| ★: | 6 |
| TF: | 7-9 |
| TI: | 0-2 |

Fig. 5

Fig. 6

Office européen
des brevets

**RAPPORT DE RECHERCHE EUROPEENNE**

0049184

Numéro de la demande

EP 81 40 1425

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 1 392 481 (H. SOUBIES-CAMY et al.) <br><br> * Figures 1-5; page 1, colonne de gauche, paragraphe 3 - page 6, colonne de droite, paragraphe 3 * <br><br> -- | 1 |
| | GB - A - 1 514 790 (S.C. CLARK) <br><br> * Figures 1-7; page 2, ligne 28 - page 5, ligne 37 * <br><br> -- | 1,2,4-7 |
| | ANGEWANDTE INFORMATEK, vol. 20, no. 10, octobre 1978 Braunschweig, DE K. EICHIN et al.: "A computer managed instruction system realized by a microprocessor", pages 438-444 <br><br> * Figures 3-6; pages 440-441: "Functional structures of the system" * <br><br> -- | 1,2 |
| | US - A - 3 528 181 (R.S. ARBON et al.) <br><br> * Revendications * <br><br> -- | 1 |
| | GB - A - 1 321 828 (STRUCTURAL COMMUNICATION SYSTEMS LIMITED) <br><br> * Revendications * <br><br> ---- | 1 |

**CLASSEMENT DE LA DEMANDE (Int. Cl.³)**

G 09 B 7/08

**DOMAINES TECHNIQUES RECHERCHES (Int. Cl.³)**

G 09 B 7/06
7/08

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-01-1982 | CARDON |

OEB Form 1503.1  06.78